# FASCICULE DE BREVET EUROPEEN

(11) **EP 2 552 736 B1**
(45) Date de publication et mention de la délivrance du brevet: **18.07.2018**
(21) Numéro de dépôt: 11719653.5
(22) Date de dépôt: 29.03.2011
(51) Int. Cl.: B60L 5/42

(54) **STRUCTURE LATÉRALE SUPÉRIEURE POUR LE CAPTAGE OCCASIONNEL OU CONTINU D'ÉNERGIE ÉLECTRIQUE MOTRICE OU AUXILIAIRE PAR UN VÉHICULE TERRESTRE**
OBERE SEITLICHE STRUKTUR FÜR DIE GELEGENTLICHE ODER KONTINUIERLICHE GEWINNUNG VON HAUPTANTRIEBS- ODER HILFSSTROM DURCH EIN LANDFAHRZEUG
UPPER LATERAL STRUCTURE FOR THE OCCASIONAL OR CONTINUOUS COLLECTION OF MAIN-DRIVE OR AUXILIARY ELECTRICAL POWER BY A LAND VEHICLE

(30) Priorité: 29.03.2010 FR 1001268
(43) Date de publication de la demande: 06.02.2013
(73) Titulaire: NewTL, 67120 Duppigheim (FR)
(72) Inventeur: ANDRE, Jean-Luc, F-67120 Molsheim (FR); MANDART, Didier, F-67200 Strasbourg (FR); BINDER, Christophe, F-67260 Keskastel (FR)
(74) Mandataire: Nuss, Laurent
(86) Numéro de dépôt international: PCT/IB2011/051315
(87) Numéro de publication internationale: WO 2011/121528

(56) Documents cités:
- DE-C- 136 240
- DE-C- 525 318
- FR-A1- 2 910 391
- GB-A- 320 253
- GB-A- 191 308 267

## Description

La présente invention concerne une structure supérieure de captage d'énergie électrique motrice et auxiliaire montée sur un véhicule terrestre de transport, par exemple un véhicule urbain de transport en commun.

Elle se rapporte plus particulièrement à une structure latérale supérieure de captage, c'est-à-dire située dans la partie supérieure latérale du véhicule, pouvant être montée en bordure latérale du toit du véhicule ou en bordure supérieure de la paroi latérale de flanc du véhicule, voir par exemple DE136240. Cette structure de captage coopère avec des équipements fixes aériens de distribution d'énergie électrique placés le long de la voie de circulation du véhicule, qui se présentent notamment sous la forme de frotteurs portés par des bras de distribution d'énergie électrique montés chacun sur un poteau ou autre support fixe de nature quelconque.

La présente invention concerne de façon générale l'alimentation aérienne en énergie électrique et non l'alimentation électrique au sol d'un véhicule.

En matière de transport en commun de passagers, la tendance actuelle consiste à réaliser des véhicules à plancher abaissé afin de faciliter l'entrée et la sortie des passagers, des poussettes et fauteuils roulants dans ou hors du véhicule. De tels véhicules répondent également aux réglementations de plus en plus nombreuses qui imposent de rendre ces véhicules accessibles aux personnes handicapées et à mobilité réduite.

Du fait de cet abaissement des véhicules, de nombreux équipements fonctionnels et techniques, tels que par exemple les blocs hydrauliques, électriques, de ventilation, de climatisation, de régulation, d'alimentation ou autre, qui avant étaient logés en partie inférieure des véhicules, doivent être déplacés et se retrouvent transposés sur le toit de ces véhicules, où ils sont généralement logés dans des coffres de toit.

Le toit de ces véhicules se retrouve ainsi très encombré et lorsque l'on souhaite réaliser une alimentation aérienne du véhicule en énergie électrique, il reste très peu d'espace disponible pour l'installation de structures aériennes de captage d'électricité, telles que des pantographes ou autres.

Le but de l'invention est de fournir une nouvelle structure supérieure de captage d'énergie électrique qui se monte non pas au niveau de la partie centrale du toit du véhicule, mais en partie latérale supérieure du véhicule, c'est-à-dire en bordure latérale du toit du véhicule ou en bordure supérieure de la paroi latérale de flanc du véhicule.

La partie centrale du toit est ainsi laissée entièrement libre pour les coffres de toit et les équipements techniques qu'ils contiennent.

En outre, la maintenance de ces structures de captage est grandement facilitée car, étant plus accessibles, elles peuvent être directement atteintes à partir de passerelles latérales installées sur le côté du véhicule.

Pour résoudre ce problème technique, l'invention fournit une structure supérieure de captage d'énergie électrique motrice ou auxiliaire à monter sur un véhicule terrestre, notamment un véhicule urbain de transport en commun articulé ou non et formé d'un ou de plusieurs modules. Cette structure supérieure de captage coopère pour l'alimentation en énergie électrique motrice ou auxiliaire de ce véhicule avec des supports fixes qui comportent un frotteur de distribution d'énergie électrique et qui sont disposés le long de la voie de circulation du véhicule.

Selon l'invention, cette structure supérieure de captage comporte un ou plusieurs tronçons de captage comprenant chacun les moyens suivants :
- au moins une piste conductrice dissociée de la structure du véhicule, qui s'étend sensiblement longitudinalement par rapport au véhicule, en partie supérieure latérale de celui-ci, et qui comporte une zone de contact glissant ou dormant pour le frotteur de distribution d'énergie électrique ;
- Une liaison électrique souple connectant la piste conductrice au circuit électrique d'alimentation du véhicule ;
- un support, électriquement isolant, sur lequel est montée la piste conductrice ;
- un moyen de liaison mécanique du tronçon de captage au véhicule qui permet de déplacer le tronçon de captage à dégager le toit du véhicule; et
- un dispositif de suspension et d'amortissement qui amortit les chocs dus au frotteur de distribution d'énergie électrique et assure un contact satisfaisant entre la zone de contact de la piste conductrice et le frotteur de distribution d'énergie électrique.

Selon un mode de réalisation préférentiel, dans l'un au moins des tronçons de captage, la piste conductrice peut avantageusement présenter à l'une au moins de ses extrémités une partie en pente formant une rampe inclinée d'engagement pour le frotteur de distribution d'énergie électrique.

La ou les structures latérales supérieures de captage selon l'invention peuvent coexister sur un même véhicule avec des structures de captage classiques de nature différente, notamment avec un pantographe, formant ainsi un système de captage mixte qui alimente simultanément ou alternativement le véhicule.

Ainsi par exemple, lorsqu'une ville est déjà équipée de caténaires classiques sur certains tronçons, le véhicule peut avantageusement être alimenté au moyen d'un pantographe sur ces tronçons et au moyen des structures latérales supérieures de captage selon l'invention sur les nouvelles voies qui seront pourvues d'équipements fixes adaptés de distribution d'énergie électrique. Il n'est donc pas nécessaire de refaire des travaux sur les anciennes parties du réseau, mais uniquement sur les nouveaux tronçons devant être aménagés.

De plus, les équipements fixes de distribution électrique qui coopèrent avec les structures latérales supérieures de captage selon l'invention sont également avantageux. En effet, comme la structure de captage de l'invention est en position latérale supérieure et non pas en position centrale, les bras fixes qui portent les frotteurs de distribution électrique peuvent être prévus plus courts, c'est-à-dire moins en porte-à-faux. Avançant moins sur la voie, ils laissent libre l'espace central de cette voie qui peut être utilisé pour le passage de véhicules de plus grande hauteur, tels que les véhicules d'urgence ou de service : pompiers, police, entretien des voies, secours et assistance diverse...

Selon un mode particulier de réalisation de l'invention, le véhicule peut comporter deux structures latérales supérieures de captage selon l'invention, qui s'étendent chacune d'un côté du véhicule. L'une de ces structures peut ainsi être utilisée pour amener le courant électrique au véhicule alors que la deuxième sert au retour du courant. Il est ainsi possible d'alimenter en énergie électrique des véhicules qui n'ont pas d'autres moyens de retour du courant tels que par exemple des bus ou autocars dont les roues sont équipées de pneus.

Bien entendu, le retour de courant peut s'effectuer par tout autre moyen envisageable par l'homme du métier et par exemple à l'aide d'un rail au sol, notamment du rail de guidage au sol des véhicules ainsi guidés.

D'autres caractéristiques et avantages de l'invention apparaîtront à la lecture de la description détaillée qui va suivre, description faite en référence aux dessins annexés, dans lesquels :
- la figure 1 est une vue de profil d'un véhicule urbain de transport en commun de type tramway, formé de plusieurs modules successifs articulés à la suite les uns des autres, et équipé de deux structures latérales supérieures de captage selon l'invention ;
- la figure 2 est un agrandissement en perspective du détail encerclé et référencé II sur la figure 1, qui illustre plus particulièrement l'extrémité avant d'une première variante de structure de captage selon l'invention ;
- la figure 3 est un agrandissement en perspective du détail encerclé et référencé III sur la figure 1, qui illustre plus particulièrement la première variante de la structure de captage de l'invention ;
- la figure 4 est une vue de dessus d'une partie du véhicule de la figure 1 sur une portion droite de son trajet ;
- la figure 5 est une vue en coupe transversale, selon le plan de coupe V-V de la figure 4, de la partie supérieure du véhicule de la figure 1 illustrant plus particulièrement une première variante de la structure latérale supérieure de l'invention ;
- la figure 6 est une vue de dessus d'un véhicule urbain de transport en commun de type tramway équipé de deux structures latérales supérieures de captage selon la première variante de l'invention et d'un pantographe, le véhicule se trouvant sur une portion courbe de son trajet ;
- les figures 7 et 8 sont des agrandissements des détails encerclés et référencés respectivement VII et VIII sur la figure 6, qui représentent la structure de captage de l'invention au niveau de la jonction entre un module et une unité intermédiaire d'articulation du véhicule, respectivement située du côté extérieur et du côté intérieur de la courbe ;
- la figure 9 est une vue de face d'un véhicule urbain de transport en commun de type tramway équipé de deux structures latérales supérieures de captage selon l'invention et d'un pantographe, le véhicule se trouvant en position de captage d'énergie électrique par l'une de ses structures supérieures latérales de captage qui est en contact d'appui glissant avec un frotteur de distribution d'énergie électrique porté par un support fixe placé le long de la voie de circulation du véhicule ;
- la figure 10 est une vue de profil d'un véhicule urbain de transport en commun de type bus et équipé de structures latérales supérieures de captage selon l'invention ;
- la figure 11 est une vue de face du véhicule de la figure 10, en position de captage d'énergie électrique ;
- la figure 12 est une vue d'un véhicule urbain de transport en commun de type tramway équipé de deux structures latérales supérieures de captage selon une deuxième variante de l'invention ;
- la figure 13 est un agrandissement d'un détail de la figure 12 illustrant plus particulièrement l'une des structures latérales supérieures de captage en contact d'alimentation avec un frotteur fixe ;
- la figure 14 est une vue de dessus d'une portion du véhicule de la figure 12.

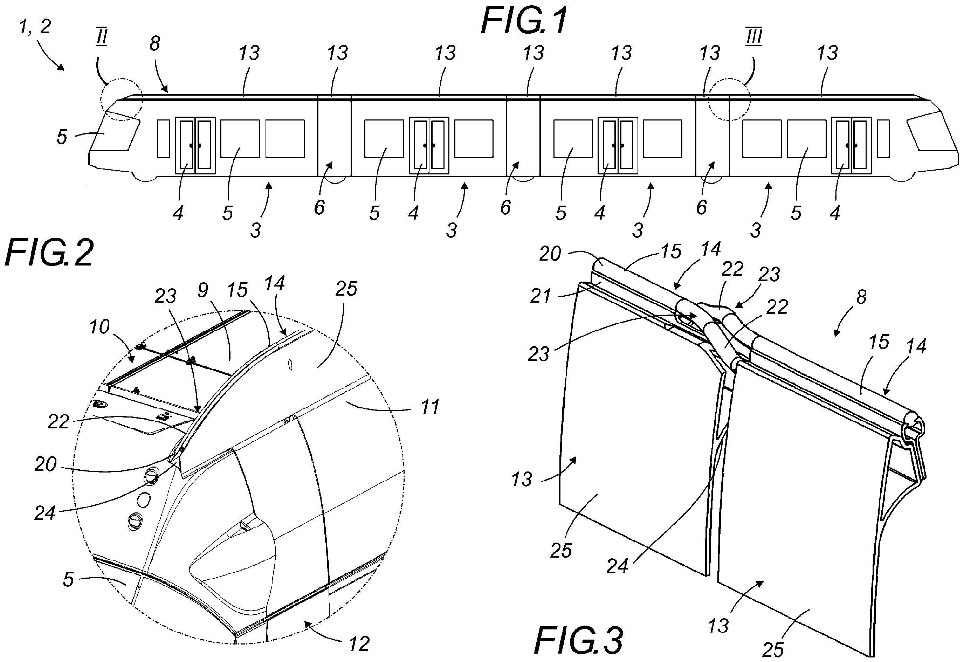

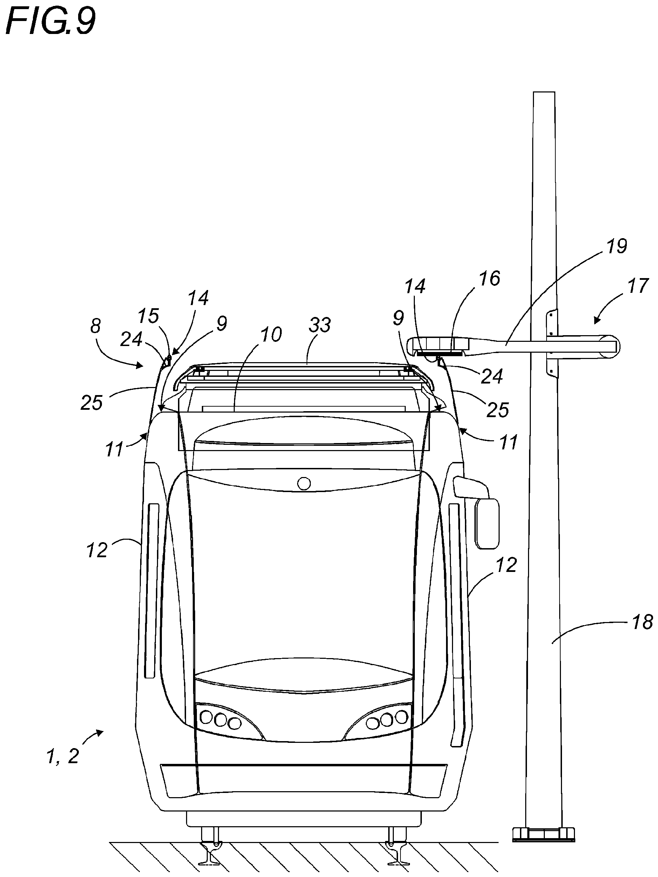

La structure latérale supérieure de captage selon la présente invention va maintenant être décrite de façon détaillée en référence aux figures 1 à 14. Les éléments équivalents représentés sur les différentes figures porteront les mêmes références numériques.

La structure supérieure de captage d'énergie électrique selon l'invention est destinée préférentiellement à un véhicule 1 urbain de transport en commun.

Il s'agit par exemple d'un véhicule de type tramway, comme représenté sur les figures 1, 4, 6 et 9, c'est-à-dire un véhicule formant une rame 2 constituée d'une succession de plusieurs modules 3, qui comportent chacun une porte d'accès 4 et des fenêtres 5. Ces modules 3 sont reliés de façon articulée les uns à la suite des autres par des unités intermédiaires d'articulation 6 portées chacune par un essieu guidé ou non.

Il peut s'agir également d'un véhicule de type tramway ne comprenant qu'un unique module, voire deux modules successifs communicant ou non l'un avec l'autre, ou encore d'un couplage de plusieurs véhicules.

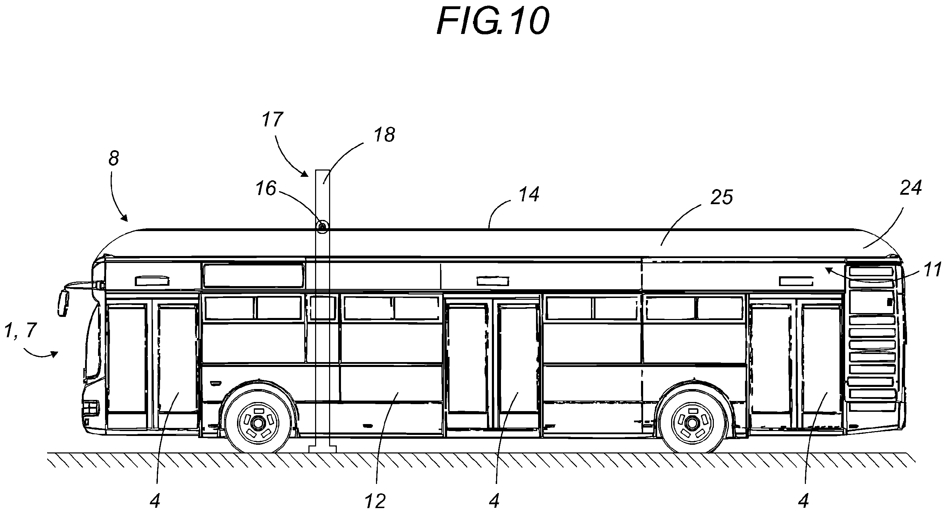

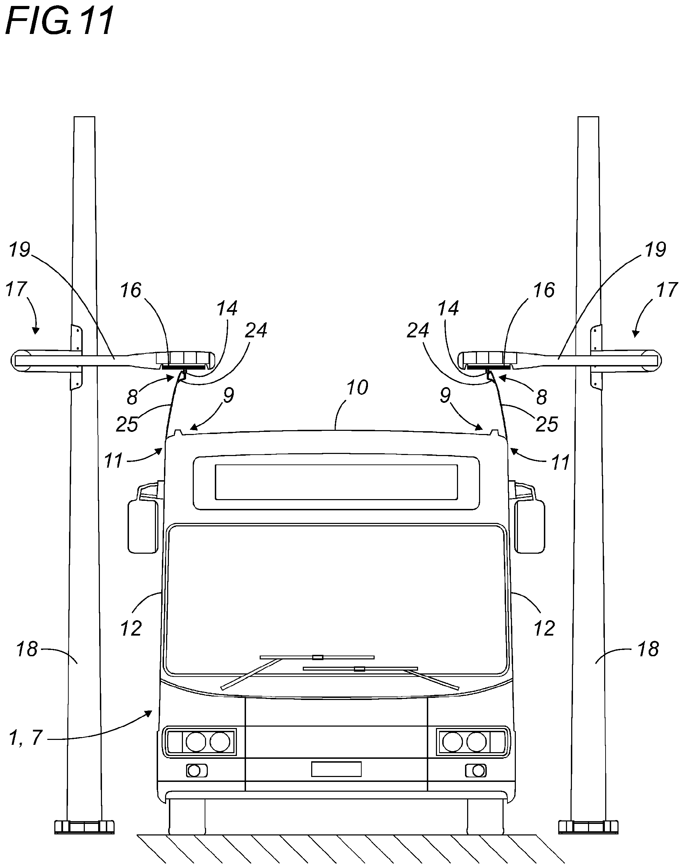

Il peut s'agir également d'un véhicule de type bus 7 tel que représenté sur les figures 10 et 11 qui ne comprend qu'un unique module 3, voire deux modules successifs articulés.

Ce véhicule 1 comporte au moins une structure latérale supérieure de captage d'énergie électrique 8 selon l'invention, s'étendant en partie supérieure latérale du véhicule, c'est-à-dire au niveau d'un bord latéral 9 du toit 10 du véhicule ou au niveau du bord supérieur 11 de l'une des parois latérales de flanc 12 du véhicule.

Pour des raisons de sécurité et afin d'éviter tout contact accidentel ou malveillant, la structure de captage 8 selon l'invention doit être placée à une hauteur suffisante pour demeurer inaccessible pour les passagers, les piétons ou toute personne susceptible de se trouver à proximité du véhicule 1, mais aussi hors de portée d'un parapluie, d'une canne, d'un colis ou de tout autre objet volumineux ou porté haut. Pour cela, elle est toujours située au-dessus des portes 4 du véhicule et de préférence à une hauteur supérieure ou égale à trois mètres par rapport au niveau du sol.

Selon les modes de réalisation, le véhicule 1 peut être équipé d'une unique structure latérale supérieure de captage 8 selon l'invention sur l'un de ses côtés ou de deux structures supérieures latérales de captage 8 selon l'invention s'étendant chacune sur l'un de ses côtés.

Dans le cas où le véhicule 1 comporte deux structures supérieures latérales de captage 8, celles-ci peuvent être utilisées alternativement par exemple en fonction de l'emplacement des sources fixes de distribution d'énergie électrique implantées sur les différentes parties du trajet ou selon le sens de circulation du véhicule. Lorsque le véhicule est dans une station, il peut aussi par exemple être prévu d'utiliser uniquement la structure de captage située du côté opposé au quai afin d'améliorer encore la sécurité des usagers.

Ces structures de captage peuvent également être utilisées simultanément, par exemple pour assurer un apport d'énergie électrique plus important au démarrage ou tout au long du trajet du véhicule ou dans certains endroits spécifiques de son parcours, ou pour réaliser une alimentation à double polarité, la deuxième structure de captage assurant le retour du courant lorsque le véhicule ne comporte pas d'autre moyen de le réaliser.

Selon les véhicules sur lesquels elle est implantée, la structure latérale supérieure de captage 8 selon l'invention peut comporter un ou plusieurs tronçons de captage 13 successifs. Lorsque le véhicule 1 est formé de plusieurs modules 3, la structure latérale supérieure de captage 8 comprend de préférence plusieurs tronçons de captage 13 répartis sur les différents modules 3 du véhicule et de préférence un tronçon de captage 13 par module 3 du véhicule 1.

La structure latérale supérieure de captage 8 comporte une liaison électrique souple qui relie électriquement sa ou ses piste(s) conductrice(s) au circuit électrique d'alimentation du véhicule 1. Cette liaison électrique est préférentiellement réalisée par un ou plusieurs conducteurs d'alimentation souples, par exemple présents aux extrémités de la structure de captage 8 ou de préférence, pour une plus grande fiabilité, au niveau de chaque tronçon de captage 13 afin de pouvoir continuer à assurer l'alimentation électrique du véhicule même en cas d'interruption de la continuité électrique de la structure latérale supérieure de captage 8.

Afin d'améliorer la sécurité et de diminuer les risques d'électrocution accidentelle par contact avec une piste conductrice, la liaison électrique de la structure de captage 8 comporte de préférence une ou plusieurs diodes. La piste conductrice de chaque structure de captage 8 ou préférentiellement de chaque tronçon de captage 13 est ainsi connectée au circuit électrique d'alimentation du véhicule via une ou plusieurs diodes de sécurité.

Ces diodes sont passantes dans le sens allant de la piste conductrice vers le circuit électrique du véhicule et sont bloquées dans le sens contraire. Elles n'autorisent donc le passage du courant que de la piste conductrice vers le circuit électrique du véhicule et s'opposent à tout retour de courant vers la piste conductrice. Elles garantissent ainsi que les pistes conductrices qui ne sont pas directement alimentées par un frotteur de distribution d'énergie électrice se trouvent et restent hors tension, même si pendant ce temps le circuit électrique du véhicule 1 est alimenté par un autre moyen tel que par exemple un pantographe ou une réserve d'énergie électrique embarquée.

Cette disposition améliore grandement la sécurité des passagers et autres personnes susceptibles de se trouver à proximité du véhicule, mais également celle des opérateurs de maintenance et autres personnels techniques qui sont fréquemment amenés à travailler sur le toit du véhicule.

La structure de captage 8 selon l'invention peut être interrompue au niveau des articulations du véhicule, comme représenté sur l'exemple des figures 2 et 3, afin de permettre tous les mouvements de roulis, de tangage et de lacet liés au roulage et à la topologie de la voie de circulation, ainsi que les mouvements de rapprochement et d'éloignement relatifs des modules successifs du véhicule liés à l'accélération, à la décélération ou au freinage du véhicule et d'une manière générale à la dynamique du véhicule.

Selon un autre mode de réalisation envisageable, les tronçons de captage 13 peuvent être raccordés entre eux au niveau des articulations du véhicule, par une liaison conductrice, par exemple articulée et coulissante ou suffisamment souple, élastique ou déformable pour s'adapter aux différents mouvements relatifs des modules successifs du véhicule 1 articulés entre eux.

Il est également possible que les unités intermédiaires d'articulation 6 du véhicule 1 soient équipées de tronçons de captage de nature différente ou même qu'elles n'en comportent pas, surtout si le véhicule est doté d'une réserve propre d'énergie électrique (batteries, volant d'inertie,...).

Selon l'invention, la structure latérale supérieure de captage 8, ou chacun de ses tronçons de captage 13, comporte une piste conductrice 14 qui s'étend sensiblement longitudinalement par rapport au véhicule et qui comporte une portion apte à servir de zone de contact 15 glissant ou dormant avec un patin ou un frotteur de distribution d'énergie électrique 16 porté par un support fixe 17 disposé le long de la voie de circulation du véhicule 1.

Il existe de nombreux types de supports fixes 17 pouvant être utilisés avec la structure latérale supérieure de captage 8 selon l'invention. Il s'agit par exemple, de poteaux tels que 18, de montants, de panneaux de signalisation, de la face inférieure ou latérale d'un pont ou d'un tunnel, de la façade d'un bâtiment ou d'un abri pour les voyageurs, ou de toute autre structure ou équipement fixe se trouvant à proximité de la voie de circulation du véhicule.

Ces supports fixes 17 portent chacun un ou plusieurs frotteurs de distribution d'énergie électrique 16 par exemple par l'intermédiaire d'un bras 19 en porte-à-faux perpendiculairement à la voie de circulation du véhicule 1. Chaque frotteur 16 entre en contact avec la zone de contact 15 de la structure de captage 8 lorsque le véhicule 1 se trouve à proximité du support fixe 17 et assure ainsi l'alimentation en énergie électrique du véhicule 1. Ce contact peut être dormant ou glissant selon que le véhicule est à l'arrêt près du support fixe 17 ou se déplace et passe à proximité de celui-ci.

Pour alimenter le véhicule 1 pendant son trajet, une multitude de supports fixes 17 doivent être prévus tout au long de la voie de circulation du véhicule ou dans des zones localisées de celle-ci. L'espacement entre ces supports est fonction des nécessités d'alimentation en énergie électrice motrice ou auxiliaire. Cet espacement peut être par exemple choisi de façon qu'il y ait toujours un frotteur 16 en contact avec la structure de captage 8 quelle que soit la position du véhicule 1 sur sa voie de circulation. Bien entendu, ces supports fixes 17 peuvent être beaucoup plus espacés, et leur emplacement peut par exemple être limité à certains endroits localisés du parcours si le véhicule comporte un moyen de stockage de l'énergie électrique.

La piste conductrice 14 de la structure latérale supérieure de captage 8 est une piste préférentiellement linéaire qui s'étend sensiblement longitudinalement par rapport au véhicule. Elle est par exemple formée d'une barre, d'une tige ou d'un fil métallique 20 ou de tout autre élément métallique profilé de section suffisante, notamment d'un fil réalisé en un alliage de cuivre et d'argent. Dans certains cas d'utilisation, ce fil métallique 20 peut être avantageusement monté sur un profilé conducteur 21, par exemple en aluminium, afin d'augmenter sa section et de pouvoir ainsi accepter une densité de courant plus importante sans surchauffe.

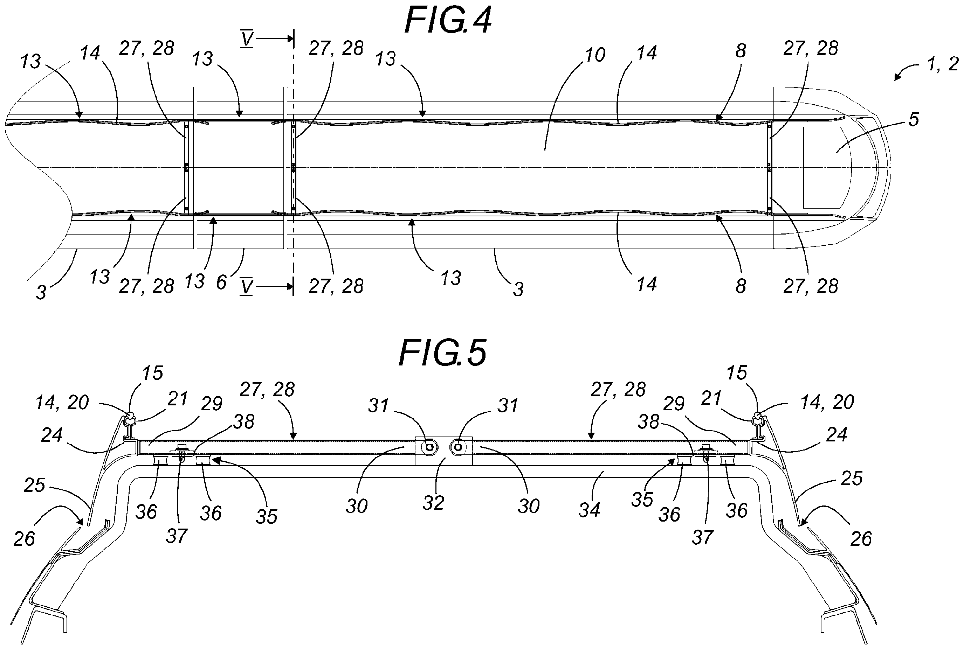

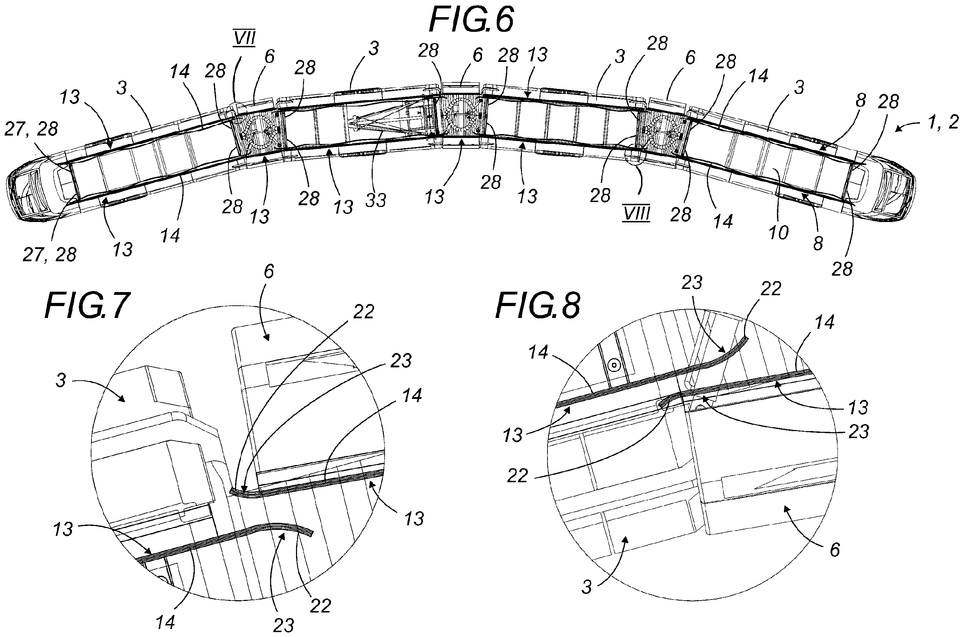

La piste conductrice 14 peut être prévue rectiligne ou préférentiellement incurvée ou ondulée, par exemple serpentant alternativement vers le côté intérieur et vers le côté extérieur du véhicule comme sur les exemples préférentiels représentés sur les figures 4 et 6, ou disposée en zigzags ou en méandres ou selon toute autre configuration non rectiligne imaginable par l'homme du métier se développant selon une direction générale sensiblement longitudinale par rapport au véhicule.

Par une telle configuration ondulée de la piste conductrice 14, on évite la formation d'une gorge d'usure dans les frotteurs de distribution d'énergie électrique 16 des supports fixes 17. L'usure de ces frotteurs 16 est avantageusement répartie sur une plus grande surface, ce qui diminue la fréquence de leurs remplacements.

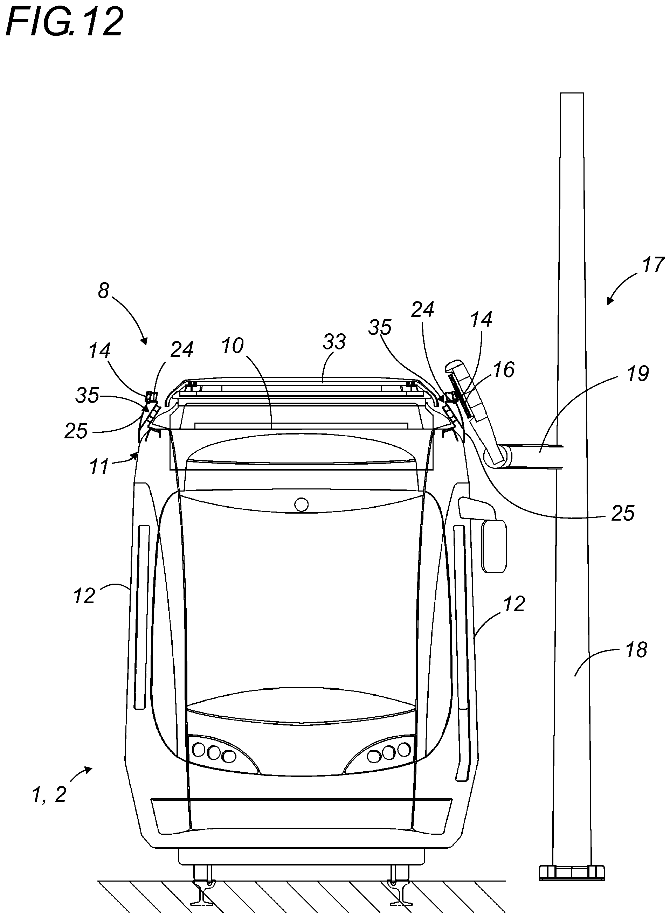

La piste conductrice 14 présente une zone de contact 15, par exemple une surface sensiblement plane et lisse, destinée à coopérer avec le frotteur de distribution d'énergie électrique 16. Selon les variantes de l'invention, cette zone de contact 15 peut être orientée vers le haut du véhicule comme sur les figures 1 à 11 ou vers le côté extérieur du véhicule comme sur les figures 12 à 14. Le patin ou frotteur de distribution d'énergie électrique 16 ainsi que son support fixe 17 sont adaptés en conséquence pour assurer un contact satisfaisant avec la zone de contact 15 de la piste conductrice 14 quelle que soit son orientation.

De préférence, la piste conductrice 14 présente au moins à l'une de ses extrémités une partie en pente 22 formant une rampe inclinée d'engagement pour le frotteur de distribution d'énergie électrique 16, comme on le voit par exemple sur la figure 2. Cette rampe inclinée d'engagement sert de surface de prise de contact pour le frotteur 16 afin de réaliser une prise de contact mécanique et électrique la moins brusque possible et d'amener le frotteur 16 progressivement et en douceur sur la zone de contact 15 de la piste conductrice 14.

Bien entendu, le sens de l'inclinaison de cette partie en pente 22 dépend de l'orientation générale de la piste conductrice 14. Ainsi, lorsque la zone de contact 15 de la piste conductrice 14 est dirigée vers le haut, c'est-à-dire qu'elle regarde vers le haut, cette partie en pente 22 est descendante, c'est-à-dire inclinée vers le bas, comme on peut le voir par exemple sur les figures 2 et 3.

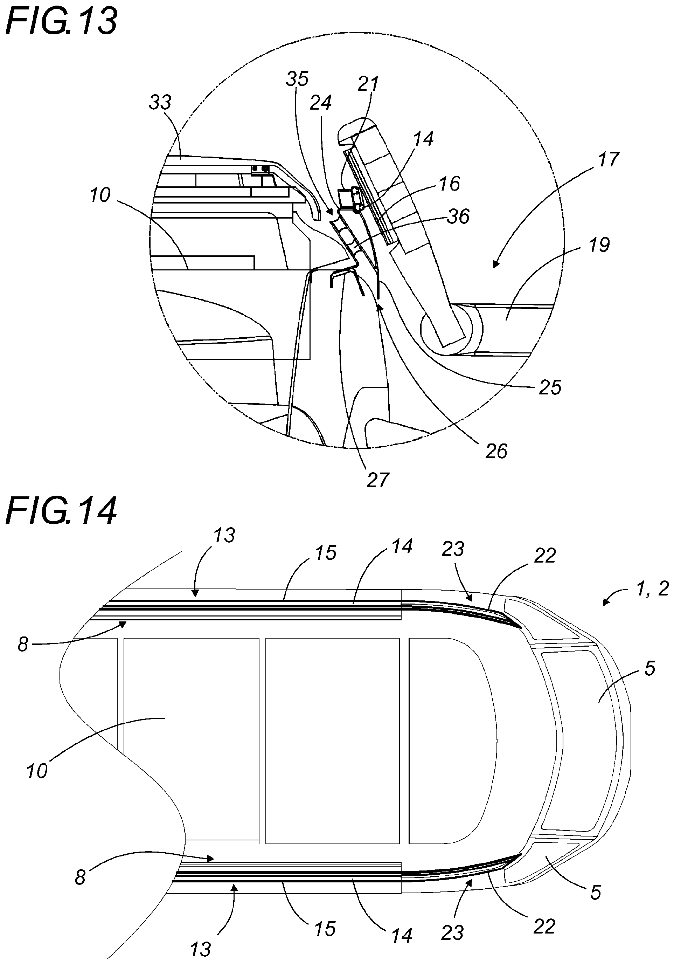

Par contre, lorsque la zone de contact 15 de la piste conductrice 14 est dirigée vers le côté extérieur du véhicule comme dans la variante des figures 12 à 14, la partie en pente 22 est inclinée vers le côté intérieur du véhicule comme représenté sur la figure 14. Elle forme ainsi une rampe d'attaque qui facilite la prise de contact avec un frotteur de distribution d'énergie électrique 16 disposé sensiblement verticalement. Dans ce cas, la partie en pente 22 peut avantageusement suivre le galbe de l'extrémité du véhicule 1. En effet, au niveau des extrémités du véhicule la forme de carrosserie revient progressivement vers sa partie centrale.

Il existe de préférence une partie en pente 22 formant rampe inclinée à l'avant et à l'arrière de la structure latérale supérieure de captage 8 selon l'invention, et de façon encore plus préférentielle à l'avant et à l'arrière de chaque tronçon de captage 13 de cette structure de captage 8 afin de permettre au frotteur de distribution d'énergie électrique 16 de passer en douceur d'un tronçon de captage 13 à l'autre, et ainsi d'un module 3 du véhicule au module 3 suivant, pendant l'avancée du véhicule 1.

Pour la prise de contact en douceur, la piste conductrice 14 de la structure de captage 8 peut avantageusement commencer et se terminer, si le véhicule est bidirectionnel, par une partie en pente 22 servant de rampe. La rampe est orientée de manière à déplacer correctement le frotteur de distribution d'énergie électrique 16 pour permettre un fonctionnement correct de celui-ci. Une telle rampe existe aussi de préférence à chaque terminaison de tronçon de captage 13 pour éviter tout saut ou coincement du frotteur 16 lors du déplacement du véhicule.

Dans une variante plus simple, concernant un véhicule unidirectionnel par exemple, une telle partie en pente 22 servant de rampe peut n'être nécessaire qu'à l'avant de la piste conductrice 14, du coté de la prise de contact avec le frotteur.

Avantageusement et comme représenté sur les figures 3 et 6 à 8, les pistes conductrices 14 de deux tronçons de captage 13 successifs peuvent s'étendre côte à côte au niveau de leurs portions d'extrémité 23 adjacentes, afin d'assurer une continuité électrique lorsque le frotteur de distribution électrique 16 passe d'un tronçon de captage à l'autre du fait de l'avancée du véhicule 1. Cette transition peut encore être facilitée par la présence d'une partie en pente 22 formant rampe inclinée à l'extrémité de chacune de ces portions d'extrémité 23 adjacentes.

Une telle disposition côte à côte des portions d'extrémité 23 des pistes conductrices 14 de deux tronçons de captage 13 successifs permet de doubler localement la piste conductrice 14 à ce niveau. Avec un frotteur de distribution d'énergie électrique 16 suffisamment large, la continuité électrique peut être garantie alors même que les tronçons de captage 13 restent indépendants et discontinus mécaniquement et que les pistes conductrices 14 ne sont pas en contact l'une avec l'autre. Il est ainsi possible de maintenir une alimentation électrique continue à partir de tronçons de captage 13 discontinus et susceptibles de se déplacer les uns par rapport aux autres comme c'est le cas au niveau des articulations entre les différents modules du véhicule pendant le roulage.

Les figures 6 à 8 illustrent plus particulièrement cette fonction générale technique pour un mode de réalisation préférentiel de l'invention. Lorsque le véhicule 1 se trouve sur une portion courbe de son trajet, les modules 3 et les unités intermédiaires d'articulation 6 qui le composent se déplacent les uns par rapport aux autres pour suivre le virage. Du côté extérieur de la courbe, les extrémités des modules 3 et des unités intermédiaires d'articulation 6 s'éloignent les uns des autres comme on le voit sur le détail de la figure 7. Au contraire, du côté intérieur de la courbe, les extrémités des modules 3 et des unités intermédiaires d'articulation 6 se rapprochent comme représenté sur le détail de la figure 8. Sur certains véhicules, les parois latérales rigides des unités intermédiaires d'articulation 6 se déplacent latéralement dans les virages par rapport aux parois latérales des autres modules 3 du véhicule en s'écartant vers l'intérieur du virage.

Ces déplacements relatifs des différents modules 3 et unités 6 du véhicule 1 créent des mouvements comparables au niveau des structures de captage 8. Tous ces mouvements sont rendus possibles du fait de la discontinuité mécanique qui existe entre chacun des tronçons de captage 13 successifs portés par les différents modules 3 et unités 6 du véhicule qui restent mécaniquement indépendants les uns des autres. Cependant, le doublement localisé des pistes conductrices 14 de chacun des tronçons de captage 13 au niveau de leurs portions d'extrémité 23 respectives permet de maintenir une continuité de l'alimentation électrique en utilisant des frotteurs de distribution d'énergie électrique 16 de largeur adaptée et ceci même dans les portions courbes du trajet.

La structure latérale supérieure de captage 8 selon l'invention, ou chacun de ses tronçons de captage 13, comporte également un support 24 sur lequel est montée la piste conductrice 14 et qui permet de tenir mécaniquement la piste conductrice 14. Ce support 24 est réalisé dans une matière électriquement isolante afin d'isoler électriquement la piste conductrice 14 du reste du véhicule 1.

Le support 24 peut être monobloc et continu sur toute la structure de captage 8 ou sur chacun des tronçons de captage 13. Il peut également être ajouré ou formé d'un ensemble de montants porteurs ou de toute autre structure électriquement isolante susceptible de tenir mécaniquement la piste conductrice 14.

De préférence, la structure supérieure de captage 8 comporte également une paroi d'habillage 25 qui pour des raisons esthétiques cache au moins partiellement la structure de captage 8. Elle habille la structure de captage 8 de manière à la rendre discrète et esthétique. Il s'agit de préférence d'une paroi latérale qui s'étend longitudinalement par rapport au véhicule et dans le prolongement de la paroi latérale de flanc 12 de celui-ci, cette paroi d'habillage 25 étant préférentiellement continue le long de chaque tronçon de captage 13.

Dans une réalisation préférée illustrée sur la figure 2, les extrémités de cette paroi d'habillage peuvent être conformées en rampe de la même manière que la structure de captage de façon à intégrer à l'ensemble les parties en pente 22 de la piste conductrice 14 de la façon la plus esthétique possible.

Cette paroi d'habillage 25 peut également servir de paroi de protection en masquant au moins partiellement la piste conductrice 14 ou en rendant cette piste conductrice 14 moins accessible pour les passagers et les piétons. En outre, elle peut servir de protection supplémentaire contre les chocs électriques et jouer le rôle d'écran phonique.

La paroi d'habillage 25 peut être indépendante du support 24 ou être assemblée sur celui-ci. Elle peut également être réalisée d'une pièce avec le support 24 comme dans le mode de réalisation préférentiel illustré par les figures 1 à 9.

De préférence, la paroi d'habillage 25 n'est pas directement en contact avec la carrosserie du véhicule. Un espace 26 peut avantageusement être laissé libre entre les deux afin de permettre l'évacuation de l'eau de pluie. Ce jeu permet également de limiter la transmission des bruits solidiens, dans le cas par exemple où la structure de captage 8 est montée sur des plots de suspension.

La structure latérale supérieure de captage 8 selon l'invention comporte également un moyen de liaison mécanique 27 permettant de relier et d'assembler la structure latérale supérieure de captage 8 ou chacun de ses tronçons de captage 13 au véhicule 1. Ce moyen de liaison mécanique 27 peut être de nature quelconque.

Il s'agit par exemple, comme dans la première variante de l'invention représentée sur les figures 1 à 9, d'un ou de plusieurs bras de liaison 28 dont l'une des extrémités 29 est fixée au support 24 et dont l'autre extrémité 30 est fixée ou montée directement ou indirectement sur le véhicule. Dans le cas représenté, ces bras de liaison 28 sont fixés sur une structure également isolante de façon à offrir une barrière supplémentaire contre la circulation des courants électriques.

La structure latérale supérieure de captage 8 comporte selon sa longueur un ou plusieurs bras de liaison 28, et de préférence deux bras de liaison 28 à chaque tronçon de captage 13 de la structure 8, chacun de ces bras 28 étant par exemple placés à l'une des extrémités du tronçon de captage 13 concerné.

Dans la réalisation représentée, ces bras de liaison 28 sont placés sur le toit 10 du véhicule où ils s'étendent de façon sensiblement transversale au véhicule, par exemple jusqu'à la partie centrale du toit 10 à laquelle ils sont directement ou indirectement reliés par leur extrémité 30, de préférence au moyen d'une articulation de pivotement telle que 31. L'extrémité 30 des bras de liaison 28 est par exemple montée sur un support 32 fixé au toit 10 du véhicule.

De préférence, ces articulations 31 sont des articulations souples, par exemple en caoutchouc, de manière à filtrer efficacement les bruits solidiens provenant des chocs lors de la prise de contact du frotteur de distribution d'énergie électrique 16 avec la piste conductrice 14, ou les bruits de frottement du frotteur 16 sur la piste conductrice 14 lors du déplacement du véhicule 1.

Grâce à leur articulation de pivotement 31, les bras de liaison 28 sont préférentiellement relevables, ce qui permet de soulever la structure latérale supérieure de captage 8 de façon à la placer bien au dessus du toit. Dans cette configuration relevée, un accès total au toit devient possible et les couvercles des coffres de toit les plus larges peuvent être ouverts sans aucune gêne.

En outre, comme la structure de captage 8 selon l'invention est latérale, un pantographe 33 peut également être librement déployé vers le haut et placé en position d'utilisation si le véhicule en est pourvu.

Evidemment, il existe d'autres façons de rendre déplaçable la structure latérale supérieure de captage 8 de l'invention pour dégager le toit 10 du véhicule, ce qui permet de s'adapter aux différents modèles de coffres de toit et aux divers modes d'ouverture de leur couvercle, ainsi qu'aux éventuels pantographes ou autres équipements de toit et à leur façon de se déployer.

La structure latérale supérieure de captage 8 peut par exemple être prévue basculante latéralement, ou éloignable latéralement par exemple au moyen de bras de liaison télescopiques, ou encore abaissable ou relevable verticalement. Toutes ces variantes et bien d'autres encore pourront être facilement imaginées et mises au point par l'homme du métier.

Selon les applications, la structure latérale supérieure de captage 8 peut également être fixe et non déplaçable.

Selon un autre mode de réalisation envisageable, la structure de captage 8 peut être portée non pas par des bras de liaison 28 supplémentaire, mais directement par le couvercle ou le capot des coffres de toit qui constituent alors le moyen de liaison mécanique 27.

La structure latérale supérieure de captage 8 peut être directement montée sur la carrosserie du véhicule 1 par son moyen de liaison mécanique 27. Cependant, afin de renforcer encore l'isolation électrique, une couche isolante supplémentaire, par exemple réalisée sous la forme d'un ou plusieurs arceaux 34 en matière isolante (figure 5), peut être intercalée entre le moyen de liaison mécanique 27 de la structure de captage 8 et la carrosserie du véhicule.

La structure latérale supérieure de captage 8 selon l'invention comprend en outre un dispositif de suspension et d'amortissement 35 qui amortit les chocs dus au frotteur de distribution d'énergie électrique 16 et assure un contact satisfaisant entre la zone de contact 15 de la piste conductrice 14 et le frotteur de distribution d'énergie électrique 16.

Ce dispositif de suspension et d'amortissement 35 évite les chocs et les frottements entre la structure latérale supérieure de captage 8 et la structure du véhicule, et limite le bruit.

Le dispositif de suspension et d'amortissement 35 comprend de préférence un ou plusieurs plots élastiques 36, par exemple en caoutchouc, préférentiellement intercalé(s) entre le support 24 et le moyen de liaison mécanique 27 ou entre le moyen de liaison mécanique 27 et la carrosserie du véhicule 1.

Sur le mode de réalisation représenté sur la figure 5, le dispositif de suspension et d'amortissement 35 est formé de deux plots élastiques 36 montés sur l'arceau isolant 34 et sur lesquels vient reposer l'extrémité 29 du bras de liaison 28.

Afin d'éviter un relevage involontaire et non souhaité du bras de liaison 28 lors du roulage du véhicule, un moyen de blocage temporaire du bras de liaison 28 est préférentiellement prévu pour empêcher ce mouvement. Ce moyen de blocage temporaire est par exemple un moyen de verrouillage 37 qui permet de lier l'extrémité 29 du bras de liaison 28 à une platine 38 solidarisées aux deux plots élastiques 36 du dispositif de suspension et d'amortissement 35.

Dans le cas où la structure latérale supérieure de captage 8 ou un tronçon de captage 13 de celle-ci est monté(e) sur une paroi du véhicule qui comporte son propre système de suspension, il n'est pas toujours nécessaire de rajouter un dispositif de suspension supplémentaire au niveau de la structure de captage. Dans ce cas, le système de suspension propre de la paroi correspondante du véhicule constitue le dispositif de suspension et d'amortissement 35 de la structure latérale supérieure de captage 8. C'est par exemple généralement le cas pour les tronçons de captage 13 montés sur les parois latérales rigides des unités intermédiaires d'articulation 6.

Les figures 12 à 14 illustrent une deuxième variante préférentielle de l'invention, qui va être succinctement décrite ci-dessous et selon laquelle la structure latérale supérieure de captage 8 selon l'invention est prévue pour coopérer avec un frotteur de distribution d'énergie électrique 16 sensiblement vertical ou légèrement incliné par rapport à la verticale.

Dans ce cas et comme exposé précédemment, la piste conductrice 14 présente une zone de contact 15 orientée vers le côté extérieur du véhicule, c'est-à-dire disposée en vis-à-vis du frotteur de distribution d'énergie électrique 16.

Afin d'éviter la formation d'une gorge d'usure dans les frotteurs de distribution d'énergie électrique 16, la piste conductrice 14 est courbe et serpente alternativement vers le haut et le bas tout en restant sensiblement longitudinale au véhicule.

Cette piste conductrice 14 présente à chacune de ses extrémités une partie en pente 22 formant une rampe inclinée d'engagement pour le frotteur de distribution d'énergie électrique 16. Cette partie en pente 22 est inclinée vers l'intérieur du véhicule (figure 14) et suit le galbe de chaque extrémité du véhicule 1.

La piste conductrice 14, formée d'une tige métallique 20 montée sur un profilé conducteur 21 en aluminium, est portée par un support 24 en matière isolante prolongé par une paroi latérale d'habillage 25 réalisée d'une pièce avec le support 24.

Cette paroi d'habillage 25 est disposée sous la piste conductrice 14 et permet de masquer le support 24, le dispositif de suspension et d'amortissement 35 et le moyen de liaison mécanique 27 de la structure latérale supérieure de captage 8. La paroi d'habillage 25 s'étend longitudinalement par rapport au véhicule, dans le prolongement de la paroi latérale de flanc 12 de celui-ci, mais sans être directement en contact avec cette paroi 12.

La structure latérale supérieure de captage 8 est fixée à la carrosserie du véhicule par l'intermédiaire d'un moyen de liaison mécanique 27, fixe et solidarisé au bord latéral 9 du toit 10 du véhicule. Une fixation du moyen de liaison mécanique 27 au niveau du bord supérieur 11 de la paroi latérale de flanc 12 du véhicule est également envisageable.

Deux plots élastiques 36, intercalés entre le support 24 et le moyen de liaison mécanique 27, constitue le dispositif de suspension et d'amortissement 35 de la structure latérale supérieure de captage 8.

De manière évidente, l'invention ne se limite pas aux modes de réalisation préférentiels décrits précédemment et représentés sur les différentes figures, l'homme du métier pouvant y apporter de nombreuses modifications et imaginer d'autres variantes sans sortir ni de la portée, ni du cadre de l'invention définis par les revendications.

## Revendications

1. Structure supérieure de captage (8) d'énergie électrique motrice ou auxiliaire à monter sur un véhicule terrestre (1) routier, notamment un véhicule routier urbain de transport en commun articulé ou non et formé d'un ou de plusieurs modules (3), structure supérieure de captage (8) coopérant pour l'alimentation en énergie électrique motrice ou auxiliaire de ce véhicule (1) avec des supports distributeurs fixes (17) comportant chacun un frotteur de distribution d'énergie électrique (16) disposés le long de la voie de circulation du véhicule, structure supérieure de captage (8) comportant un ou plusieurs tronçons de captage (13) comprenant chacun au moins une piste conductrice (14) dissociée de la structure du véhicule, qui s'étend dans son ensemble sensiblement longitudinalement par rapport à la direction générale longitudinale du véhicule (1), **caractérisée en ce que** :
- la piste conductrice (14) de chaque tronçon s'étend en partie supérieure latérale du véhicule (1) et comporte une zone de contact (15) glissant ou dormant pour le frotteur de distribution d'énergie électrique (16), zone de contact à face de contact plate ou bombée, cette piste conductrice (14) étant reliée par une liaison électrique souple au circuit électrique d'alimentation du véhicule (1) ;
et **caractérisée en ce qu'**elle comporte en outre :
- un support (24), électriquement isolant, sur lequel est montée la piste conductrice (14) ;
- un moyen de liaison mécanique (27) du tronçon de captage au véhicule qui permet de déplacer le tronçon de captage de façon à dégager le toit (10) du véhicule (1) ; et
- un dispositif de suspension et d'amortissement (35) situé sur le véhicule qui amortit les chocs dus au frotteur de distribution d'énergie électrique (16) et assure un contact satisfaisant entre la zone de contact (15) de la piste conductrice (14) et le frotteur de distribution d'énergie électrique (16).

2. Structure supérieure de captage (8) selon la revendication 1 **caractérisée en ce qu'**elle est montée en bordure latérale (9) du toit (10) du véhicule (1) ou en bordure supérieure (11) de l'une des parois latérales de flanc (12) du véhicule (1).

3. Structure supérieure de captage selon l'une quelconque des revendications précédentes **caractérisée en ce que** la piste conductrice (14) est linéaire et sensiblement rectiligne ou légèrement oblique.

4. Structure supérieure de captage selon la revendication 1 ou 3 **caractérisée en ce que** la piste conductrice (14) comporte des déviations transversales en étant incurvée ou ondulée ou disposée en zigzags ou en méandres ou serpente alternativement vers le côté intérieur puis vers le côté extérieur du véhicule ou serpente alternativement vers le haut et vers le bas.

5. Structure supérieure de captage selon l'une quelconque des revendications précédentes **caractérisée en ce que** la zone de contact (15) de la piste conductrice (14) est dirigée vers le haut ou vers le côté extérieur du véhicule (1).

6. Structure supérieure de captage selon l'une quelconque des revendications précédentes **caractérisée en ce que** la piste conductrice (14) est formée d'une barre, d'une tige ou d'un fil métallique (20) monté(e) sur un profilé électriquement conducteur (21).

7. Structure supérieure de captage selon l'une quelconque des revendications précédentes **caractérisée en ce que** dans l'un au moins des tronçons de captage (13), la piste conductrice (14) présente à l'une au moins de ses extrémités (23) une partie en pente (22) formant une rampe inclinée d'engagement pour le frotteur de distribution d'énergie électrique (16), ladite partie en pente (22) étant inclinée vers le bas ou vers le côté intérieur du véhicule (1) ou suit le galbe de l'extrémité du véhicule (1) vers l'avant du véhicule dans le sens de la marche.

8. Structure supérieure de captage selon l'une quelconque des revendications précédentes **caractérisée en ce que** les pistes conductrices (14) de deux tronçons de captage (13) successifs s'étendent côte à côte au niveau de leurs portions d'extrémité (23) adjacentes, de manière à doubler localement la piste conductrice (14) à ce niveau.

9. Structure supérieure de captage selon l'une quelconque des revendications précédentes **caractérisée en ce que** la liaison électrique comporte au moins une diode à travers laquelle la piste conductrice (14) est connectée au circuit électrique d'alimentation du véhicule, cette diode étant passante dans le sens allant de la piste conductrice (14) vers le circuit électrique du véhicule.

10. Structure supérieure de captage selon l'une quelconque des revendications précédentes **caractérisée en ce que** le moyen de liaison mécanique (27) comprend au moins un bras de liaison (28) dont l'une des extrémités (29) est fixée au support (24) et dont l'autre extrémité (30) est fixée ou montée directement ou indirectement au, ou sur le véhicule (1).

11. Structure supérieure de captage selon la revendication 12 **caractérisée en ce que** le bras de liaison (28) s'étend, sensiblement transversalement au véhicule, sur le toit (10) du véhicule auquel il est directement ou indirectement relié par son extrémité (30).

12. Structure supérieure de captage selon l'une quelconque des revendications 1 à 11 **caractérisée en ce que** le moyen de liaison mécanique (27) est constitué par le couvercle ou le capot des coffres de toit du véhicule (1).

13. Structure supérieure de captage selon l'une quelconque des revendications précédentes **caractérisée en ce que** le dispositif de suspension et d'amortissement (35) comprend au moins un plot élastique (36) ou est constitué par le système de suspension propre de la paroi du véhicule sur laquelle est montée la structure de captage (8).

14. Structure supérieure de captage (8) selon l'une quelconque des revendications précédentes **caractérisée en ce qu'**elle comporte en outre une paroi d'habillage (25) qui vient masquer au moins partiellement la structure de captage (8), ladite paroi d'habillage (25) étant une paroi latérale qui s'étend longitudinalement par rapport au véhicule et dans le prolongement de l'une des parois latérales de flanc (12) du véhicule, mais sans être directement en contact avec cette paroi latérale de flanc (12).

15. Véhicule routier urbain de transport en commun à propulsion électrique **caractérisé en ce qu'**il comporte pour son alimentation en énergie électrique motrice ou auxiliaire, au moins une structure supérieure de captage (8) selon l'une quelconque des revendications 1 à 14 disposée en partie latérale supérieure du véhicule (1).

## Patentansprüche

1. Obere Aufnahmestruktur (8) für elektrische Antriebs- oder Hilfsenergie zur Montage auf einem terrestrischen Straßenfahrzeug (1), insbesondere einem gelenkigen oder nicht gelenkigen städtischen Straßenfahrzeug für den öffentlichen Verkehr mit einem oder mehreren Modulen (3), wobei die obere Aufnahmestruktur (8) zur Versorgung des Fahrzeugs (1) mit elektrischer Antriebs- oder Hilfsenergie mit stationären Verteilungsmasten (17) zusammenwirkt, welche jeweils ein Schleifstück (16) zur Verteilung der elektrischen Energie aufweisen und entlang der Fahrspur des Fahrzeugs angeordnet sind, wobei die obere Aufnahmestruktur (8) einen oder mehrere Aufnahmeabschnitte (13) aufweist, welche jeweils wenigstens eine von der Struktur des Fahrzeugs getrennte Leiterbahn (14) umfassen, welche sich insgesamt im Wesentlichen in Längsrichtung in Bezug auf die allgemeine Längsrichtung des Fahrzeugs (1) erstreckt, **dadurch gekennzeichnet, dass**
- sich die Leiterbahn (14) eines jeden Abschnittes an einem oberen seitlichen Bereich des Fahrzeugs (1) erstreckt und eine gleitende oder ruhende Kontaktzone (15) für das Schleifstück (16) zur Verteilung der elektrischen Energie aufweist, wobei die Kontaktzone eine flache oder gewölbte Kontaktfläche besitzt, wobei die Leiterbahn (14) über eine flexible elektrische Verbindung mit dem elektrischen Stromversorgungskreislauf des Fahrzeugs (1) verbunden ist;
sowie **dadurch gekennzeichnet, dass** sie ferner
- einen elektrisch isolierten Träger (24), auf welchem die Leiterbahn (14) montiert ist;
- ein mechanisches Verbindungsmittel (27) des Aufnahmeabschnittes mit dem Fahrzeug, welche eine Verlagerung des Aufnahmeabschnittes derart ermöglicht, um das Dach (10) des Fahrzeugs (1) freizulegen; und
- eine auf dem Fahrzeug angeordnete Federungs- und Dämpfungseinrichtung (35), welche die durch das Schleifstück (16) zur Verteilung der elektrischen Energie bedingten Stöße abdämpft und einen zufriedenstellenden Kontakt zwischen der Kontaktzone (15) der Leiterbahn (14) und dem Schleifstück (16) zur Verteilung der elektrischen Energie sicherstellt, aufweist.

2. Obere Aufnahmestruktur (8) nach Anspruch 1, **dadurch gekennzeichnet, dass** sie an dem seitlichen Rand (9) des Dachs (10) des Fahrzeugs (1) oder an dem oberen Rand (11) einer der Seitenwände der Flanken (12) des Fahrzeugs (1) montiert ist.

3. Obere Aufnahmestruktur nach einem der vorangehenden Ansprüche, **dadurch gekennzeichnet, dass** die Leiterbahn (14) linear und im Wesentlichen geradlinig oder geringfügig schräg angeordnet ist.

4. Obere Aufnahmestruktur nach Anspruch 1 oder 3, **dadurch gekennzeichnet, dass** die Leiterbahn (14) transversale Umlenkungen aufweist, indem sie gekrümmt oder wellig oder zickzackförmig oder mäandrierend angeordnet ist oder auf alternative Weise in Schlangenlinien in Richtung der Innenseite und sodann in Richtung der Außenseite des Fahrzeugs oder auf alternative Weise in Schlangenlinien nach oben und nach unten angeordnet ist.

5. Obere Aufnahmestruktur nach einem der vorangehenden Ansprüche, **dadurch gekennzeichnet, dass** die Kontaktzone (15) der Leiterbahn (14) nach oben oder nach der Außenseite des Fahrzeugs (1) gerichtet ist.

6. Obere Aufnahmestruktur nach einem der vorangehenden Ansprüche, **dadurch gekennzeichnet, dass** die Leiterbahn (14) von einem Holm, einer Stange oder einem Draht aus Metall (20) gebildet ist, welche(r) auf einem elektrischen Leiterprofil (21) montiert ist.

7. Obere Aufnahmestruktur nach einem der vorangehenden Ansprüche, **dadurch gekennzeichnet, dass** an wenigstens einem der Aufnahmeabschnitte (13) die Leiterbahn (14) an wenigstens einem ihrer Enden (23) einen Schrägabschnitt (22) aufweist, welcher eine geneigte Rampe zum Angriff des Schleifstückes (16) zur Verteilung der elektrischen Energie bildet, wobei der Schrägabschnitt (22) nach unten oder in Richtung der Innenseite des Fahrzeugs (1) geneigt ist oder der Rundung des Endes des Fahrzeugs (1) - in Fahrtrichtung des Fahrzeugs betrachtet - nach vorne folgt.

8. Obere Aufnahmestruktur nach einem der vorangehenden Ansprüche, **dadurch gekennzeichnet, dass** sich die Leiterbahnen (14) zweier aufeinanderfolgender Aufnahmeabschnitte (13) nebeneinander auf dem Niveau ihrer benachbarten Endabschnitte (23) erstrecken, um die Leiterbahn (14) auf diesem Niveau lokal zu verdoppeln.

9. Obere Aufnahmestruktur nach einem der vorangehenden Ansprüche, **dadurch gekennzeichnet, dass** die elektrische Verbindung wenigstens eine Diode aufweist, über welche die Leiterbahn (14) mit dem elektrischen Stromversorgungskreislauf des Fahrzeugs (1) verbunden ist, wobei die Diode in einer Richtung stromleitend ist, welche sich von der Leiterbahn (14) in Richtung des elektrischen Stromkreislaufes des Fahrzeugs erstreckt.

10. Obere Aufnahmestruktur nach einem der vorangehenden Ansprüche, **dadurch gekennzeichnet, dass** das mechanische Verbindungsmittel (27) wenigstens einen Verbindungsarm (28) aufweist, dessen eines Ende (29) an dem Träger (24) befestigt ist und dessen anderes Ende (30) direkt oder indirekt an oder auf dem Fahrzeug (1) befestigt oder montiert ist.

11. Obere Aufnahmestruktur nach Anspruch 10, **dadurch gekennzeichnet, dass** sich der Verbindungsarm (28) im Wesentlichen quer zu dem Fahrzeug auf dem Dach (10) des Fahrzeugs erstreckt, an welchem er an seinem Ende (30) direkt oder indirekt befestigt ist.

12. Obere Aufnahmestruktur nach einem der Ansprüche 1 bis 11, **dadurch gekennzeichnet, dass** das mechanische Verbindungsmittel (27) von der Abdeckung oder der Verschlusshaube des Dachs des Fahrzeugs (1) gebildet ist.

13. Obere Aufnahmestruktur nach einem der vorangehenden Ansprüche, **dadurch gekennzeichnet, dass** die Federungs- und Dämpfungseinrichtung (35) wenigstens eine elastische Abstützung (36) aufweist oder von dem eigenen Aufhängungssystem der Wand des Fahrzeugs gebildet ist, an welcher die Aufnahmestruktur (8) montiert ist.

14. Obere Aufnahmestruktur (8) nach einem der vorangehenden Ansprüche, **dadurch gekennzeichnet, dass** sie ferner eine Verkleidungswand (25) aufweist, welche die Aufnahmestruktur (8) zumindest teilweise verdeckt, wobei die Verkleidungswand (25) von einer Seitenwand gebildet ist, welche sich in Bezug auf das Fahrzeug in Längsrichtung und in der Verlängerung einer der Seitenwände der Flanken (12) des Fahrzeugs (1) erstreckt, aber ohne mit den Seitenwänden der Flanken (12) direkt in Kontakt zu stehen.

15. Städtisches Straßenfahrzeug für den öffentlichen Verkehr mit elektrischem Antrieb, **dadurch gekennzeichnet, dass** es zu seiner Versorgung mit elektrischer Antriebs- oder Hilfsenergie wenigstens eine obere Aufnahmestruktur (8) nach einem der Ansprüche 1 bis 14 aufweist, welche an dem seitlichen oberen Bereich des Fahrzeugs (1) angeordnet ist.

## Claims

1. Upper structure (8) for collecting electrical driving power or auxiliary power, to be mounted on an on-road land vehicle (1), in particular an on-road urban public transport vehicle that is articulated or non-articulated and is formed of one or more modules (3), said upper collecting structure (8) cooperating with fixed distributor supports (17) which are arranged along the traffic lane of the vehicle and which each comprise an electrical power distribution collector shoe (16), so as to supply electrical driving power or auxiliary power to said vehicle (1), said upper collecting structure (8) comprising one or more collecting portions (13), each of which has at least one conductive track (14) that is separate from the vehicle structure, the entirety of which track extends substantially longitudinally with respect to the general longitudinal direction of the vehicle (1), **characterised in that**:
- the conductive track (14) of each portion extends along the upper lateral part of the vehicle (1) and comprises a sliding or fixed contact zone (15) for the electrical power distribution collector shoe (16), said contact zone having a flat or rounded contact face, said conductive track (14) being connected to the electrical power supply circuit of the vehicle (1) by means of a flexible electrical connection;
and **characterised in that** said structure also comprises:
- an electrically insulating support (24) on which the conductive track (14) is mounted;
- a mechanical connection means (27) for connecting the collecting portion to the vehicle, which connection means allows the collecting portion to be moved so as to free the roof (10) of the vehicle (1); and
- a suspension and damping device (35) which is arranged on the vehicle and which damps the impacts resulting from the electrical power distributor collector shoe (16) and ensures satisfactory contact between the contact zone (15) of the conductive track (14) and the electrical power distribution collector shoe (16).

2. Upper collecting structure (8) according to claim 1, **characterised in that** said structure is mounted on the lateral edge (9) of the roof (10) of the vehicle (1), or on the upper edge (11) of one of the lateral walls of the side (12) of the vehicle (1).

3. Upper collecting structure according to either of the preceding claims, **characterised in that** the conductive tack (14) is linear and substantially straight or slightly oblique.

4. Upper collecting structure according to either claim 1 or claim 3, **characterised in that** the conductive track (14) has transverse deviations, being curved, or undulating, or arranged in zigzags or so as to meander, or so as to snake alternately towards the inner side of the vehicle and then towards the outer side of the vehicle, or so as to snake alternately upwards and downwards.

5. Upper collecting structure according to any one of the preceding claims, **characterised in that** the contact zone (15) of the conductive track (14) faces upwards or towards the outer side of the vehicle (1).

6. Upper collecting structure according to any one of the preceding claims, **characterised in that** the conductive track (14) is formed by a metal bar, rod or wire (20) mounted on an electrically conductive profile member (21).

7. Upper collecting structure according to any one of the preceding claims, **characterised in that**, in at least one of the collecting portions (13), the conductive track (14) has, on at least one of the ends (23) thereof, a sloping part (22) that forms an inclined engagement ramp for the electrical power distribution collector shoe (16), said sloping part (22) being inclined towards the base or towards the inner side of the vehicle (1) or following the crown of the end of the vehicle (1) towards the front of the vehicle in the direction of travel.

8. Upper collecting structure according to any one of the preceding claims, **characterised in that** the adjacent end portions (23) of the conductive tracks (14) of two consecutive collecting portions (13) extend side by side such that the conductive track (14) is doubled locally in this region.

9. Upper collecting structure according to any one of the preceding claims, **characterised in that** the electrical connection comprises at least one diode, by means of which the conductive track (14) is connected to the electrical power supply circuit of the vehicle, said diode being conductive in the direction from the conductive track (14) towards the electrical circuit of the vehicle.

10. Upper collecting structure according to any one of the preceding claims, **characterised in that** the mechanical connection means (27) comprises at least one connecting arm (28), one of the ends (29) of which is fastened to the support (24), and the other end (30) of which is fastened or mounted, directly or indirectly, to or on the vehicle (1).

11. Upper collecting structure according to claim 12, **characterised in that** the connecting arm (28) extends, substantially transversely to the vehicle, on the roof (10) of the vehicle to which the end (30) of said arm is directly or indirectly connected.

12. Upper collecting structure according to any one of claims 1 to 11, **characterised in that** the mechanical connection means (27) is formed by the cover or the hood of the roof boxes of the vehicle (1).

13. Upper collecting structure according to any one of the preceding claims, **characterised in that** the suspension and damping device (35) comprises at least one resilient contact (36), or consists of the actual suspension system of the wall of the vehicle on which the collecting structure (8) is mounted.

14. Upper collecting structure (8) according to any one of the preceding claims, **characterised in that** said structure further comprises a cladding wall (25) which conceals the collecting structure (8) at least in part, said cladding wall (25) being a lateral wall that extends longitudinally with respect to the vehicle and forms an extension of one of the lateral walls of the side (12) of the vehicle, but without being in direct contact with said lateral wall of the side (12).

15. Electrically driven on-road urban public transport vehicle having, **characterised in that** said vehicle comprises, for the supply of electrical driving power or auxiliary power thereof, at least one upper collecting structure (8) according to any one of claims 1 to 14 arranged on the upper lateral part of the vehicle (1).
